# EUROPÄISCHE PATENTSCHRIFT

(11) **EP 1 112 570 B1**
(45) Veröffentlichungstag und Bekanntmachung des Hinweises auf die Patenterteilung: **02.01.2003**
(21) Anmeldenummer: 99915673.0
(22) Anmeldetag: 17.03.1999
(51) Int. Cl.: G11B 7/00

(54) **OPTISCHER DATENSPEICHER**
OPTICAL DATA STORAGE
MEMOIRE OPTIQUE

(30) Priorität: 19.09.1998 DE 29816802 U
(43) Veröffentlichungstag der Anmeldung: 04.07.2001
(73) Patentinhaber: tesa AG, 20253 Hamburg (DE); Noehte, Steffen Dr., 69469 Weinheim (DE); Gerspach, Matthias, 69221 Dossenheim (DE)
(72) Erfinder: LEIBER, Jörn, D-22529 Hamburg (DE); NOEHTE, Steffen, D-69493 Hirschberg (DE); GERSPACH, Matthias, D-69221 Dossenheim (DE)
(74) Vertreter: UEXKÜLL & STOLBERG
(86) Internationale Anmeldenummer: EP9901852
(87) Internationale Veröffentlichungsnummer: WO00017864

(56) Entgegenhaltungen:
- EP-A- 0 352 194
- EP-A- 0 514 589
- PATENT ABSTRACTS OF JAPAN vol. 004, no. 127 (P-026), 6. September 1980 & JP 55 080832 A (OKI ELECTRIC IND CO LTD), 18. Juni 1980
- PATENT ABSTRACTS OF JAPAN vol. 097, no. 007, 31. Juli 1997 & JP 09 063122 A (HITACHI LTD), 7. März 1997
- PATENT ABSTRACTS OF JAPAN vol. 098, no. 006, 30. April 1998 & JP 10 031844 A (HITACHI LTD), 3. Februar 1998
- PATENT ABSTRACTS OF JAPAN vol. 010, no. 278 (P-499), 20. September 1986 & JP 61 099981 A (HITACHI LTD), 19. Mai 1986

## Beschreibung

Die vorliegende Erfindung betrifft einen optischen Datenspeicher.

Optische Datenspeicher sind bekannt. So sind flache runde Datenträger als CD-Roms, Audio-CDs usw. im Handel. Weiter sind bekannt flache runde Datenträger wie DVDs, bei welchen zwei Schichten mit optischer Information übereinander angeordnet werden und wahlweise ausgelesen werden können.

Ein optischer Datenspeicher ist auch aus der US 5,109,374 bekannt, in der aber lediglich die Anordnung eines Datenträgers in einer Lage auf einem Zylinder offenbart wird.

Die EP-A-0 352 194 offenbart einen Datenspeicher mit einem bandartigen Informationsträger, der mit Hilfe von Licht und einem elektrischen Feld in mehreren Ebenen beschrieben werden kann. Zum Schreiben und Lesen von Information muss der Informationsträger von einer Vorratsspule abgewickelt werden; danach wird er auf eine Aufnahmespule aufgewickelt.

Die EP-A-0 514 589 beschreibt einen Datenspeicher mit einem optisch beschreibbaren bandartigen Informationsträger, der ebenfalls im abgewickelten Zustand benutzt wird. Dabei ist nur eine einzige Speicherlage vorgesehen.

Die Aufgabe der Erfindung besteht darin, einen optischen Datenspeicher zur Verfügung zu stellen, der eine hohe Aufnahmekapazität für Daten hat, der leicht beschrieben und wieder ausgelesen werden kann, der gewährleistet, daß die auf ihm befindlichen Daten lange Zeit speicherbar sind, und der einfach aufgebaut und preisgünstig herstellbar ist.

Gelöst wird diese Aufgabe durch die Verwendung gemäß Anspruch 1. Bevorzugte Ausführungsformen der Erfindung ergeben sich aus den Unteransprüchen.

Demgemäß betrifft die Erfindung einen Datenspeicher, der einen spiralartig aufgewickelten Informationsträger aufweist, auf welchem optisch auslesbare Informationseinheiten vorgesehen sind. Der Informationsträger ist optisch transparent. Der erfindungsgemäße Datenspeicher weist bedingt durch die Wicklung des Informationsträgers eine im wesentlichen runde Form (bevorzugt Rolle) auf.

In einer ersten vorteilhaften Ausführungsform des erfindungsgemäßen Datenspeichers sind die Informationseinheiten durch mehrere Informationsträgerlagen hindurch auslesbar; insbesondere ist der Datenspeicher im aufgewickelten Zustand - also durch mehrere Wickellagen - auslesbar, was durch die Wahl eines hochtransparenten Informationsträgers erreicht wird.

Die erfindungsgemäße Wahl des Informationsträgers sowie das Ein- bzw. Aufbringen der Informationseinheiten ergeben einen Datenträger, der einen sehr kompakten Speicher darstellt. Obwohl auf klar definierten Wickellagen geschrieben und davon ausgelesen werden kann, wird ein Speichermedium erhalten, das eine Abspeicherung im Volumen zuläßt. Damit lassen sich die Nachteile der bekannten flächigen Datenspeicher durch das spiralartige Aufwickeln vermeiden. Des weiteren ist es anders als etwa auf einer CD nicht erforderlich, eine sehr große Oberfläche vorzusehen.

Der transparente Wickelkörper, der aus den Lagen des aufgewikkelten Informationsträgers gebildet ist, umfaßt bevorzugt wenigstens 10 Lagen und hat bevorzugt einen Durchmesser von etwa 20 bis 50 mm. Die Höhe des Wickelzylinders kann zum Beispiel um 19 mm betragen. Die Anzahl der Wicklungen kann z.B. zwischen 10 und 30 liegen, wobei aber auch durchaus höhere Zahlen verwirklicht werden können.

Der Datenspeicher kann einen Informationsträger aus transparentem Polymerfilm umfassen, wobei insbesondere PMMA (Polymethylmethacrylat) oder BOPP (biaxial orientiertes Polypropylen) verwendbar sind.

Wenn der Datenspeicher zwischen den Polymerfilmlagen ein transparentes Adhäsionsmittel aufweist, insbesondere einen druckempfindlichen Kleber, werden sowohl Grenzflächenreflexionen minimiert als auch ein ungewolltes Abwickeln vermieden. Der Adhäsionsfilm ist bevorzugt blasenbefreit, genauso wie der Polymerfilm. Es ist zur Verbesserung der optischen Transparenz wünschenswert, wenn das Adhäsionsmittel einen nur geringfügig vom Brechungsindex des Informationsträgers abweichenden Brechungsindex besitzt. So kann der Unterschied der Brechungsindices von Informationsträger und Adhäsionsmittel so gering sein, daß die Reflexion an der Grenzschicht unter 2% beträgt, vorzugsweise unter 0,1%. Insbesondere bevorzugt ist der Unterschied der Brechungsindices kleiner als 0,005. Damit sind auch durch mehr als zwanzig Wickellagen Informationseinheiten gut auslesbar, ohne daß der Informationsträgerfilm antireflexbeschichtet sein muß.

Wenn der Polymerfilm eine Dicke zwischen 10 und 100 µm, bevorzugt um oder unter 50 µm, insbesondere bevorzugt um 35 µm, aufweist, stellt dies sicher, daß die Informationen auf unterschiedlichen Wickellagen gut auflösbar voneinander getrennt sind, ohne daß zu große Volumina benötigt werden.

Zugleich kann das Adhäsionsmittel eine Schichtdicke zwischen 1 und 40 µm, bevorzugt unter 25 µm, insbesondere um 2 µm, aufweisen. Wenn zugleich das Adhäsionsmittel mit einem Absorber für Schreiblicht ausgestattet ist, also die zum Schreiben der Informationseinheiten erforderliche Energie absorbiert und auf den Polymerfilm zu dessen thermischer Strukturierung überträgt, kann durch die angegebene Schichtdicke ein hinreichend großer Effekt erzielt werden. Die Dicke ist für typische Fokusausdehnungen im Material dabei ideal.

Der Datenspeicher kann einen optisch transparenten Wickelkern aufweisen, der insbesondere als transparenter Hohlzylinder konstruiert ist. So wird der Datenspeicher von innen heraus auslesbar, was es ermöglicht, die Optik für Schreiben und/oder Lesen und/oder Wiederbeschreiben im Wickelinneren insbesondere rotierend anzuordnen. Eine solche Anordnung vereinfacht die Herstellung des Datenspeichers insofern, als daß nur die Optik ausgewuchtet werden muß, nicht jedoch jeder einzelne Datenträger. Zum Auswuchten der Leseoptik werden bevorzugt zwei sich diametral gegenüberliegende Linsenanordnungen vorgesehen, zwischen denen etwa eine zentrale Strahlteilereinheit zum Ein- und Ausstrahlen des Lichtes vorgesehen werden kann. Diese Linsen können mit dem Strahlteiler rotieren. Von diesen Linsen kann die erste für äußere Wickellagen, die zweite für die innen liegenden Wickeleinheiten vorgesehen sein, was die Zugriffsgeschwindigkeiten erhöht, da nicht mehr so weit umfokussiert werden muß.

Bevorzugt ist der Datenspeicher dadurch vorformatiert, daß die Formatierung durch und/oder mittels der Spirallagen gebildet ist. Eine Formatierung kann auch bei oder vor dem Aufwickeln in oder auf den Informationsträger während der Herstellung einbracht werden, zum Beispiel durch Heißprägung usw.

Besonders bevorzugt umfaßt der Datenspeicher einen Informationsträger, der eine hohe im Material gespeicherte Eigenenergie besitzt, zum Beispiel einen Polymerfilm, der vorgespannt ist, insbesondere in zwei Ebenen. Dies ist insofern besonders vorteilhaft, als dann durch Deposition einer nur geringen Energiemenge eine starke Materialänderung durch Rückverformung erhalten werden kann, so daß für sehr große, leicht auslesbare Materialveränderungen schwache optische Strahlen ausreichen.

Es ist möglich, daß die oder einige der Informationseinheiten durch lokale thermische Erwärmung des Informationsträgers gebildet sind. Bei einem vorgespannten Polymerfilm ändert sich durch die thermische Erwärmung die optische Weglänge im Material und/oder der Brechungsindex bzw. die Reflektivität. Diese Änderung ist ohne weiteres an der Rückreflexionsintensität eines eingestrahlten Lichtstrahles, der insbesondere von einem herkömmlichen Halbleiterlaser emittiert wird, erfaßbar.

Bevorzugt ist, wenn der vorgespannte Informationsträger am Ort der thermischen Erwärmung lokal eine geänderte optische Dichte aufweist, insbesondere mit einer Brechungsindexänderung von ca. 0,2. Bevorzugt ist weiter, wenn die Informationseinheiten durch Änderung der optischen Eigenschaften in einem Bereich von unter 1 µm Durchmesser gebildet sind. Dies ist mit kommerziellen Halbleiterlaserdioden und Optiken gut möglich.

Die Informationseinheiten können Information binär speichern, eine weitere Möglichkeit ist die Speicherung in mehreren Graustufen. Dies ist möglich, wenn sich der Polymerfilm auf gezielte Weise ohne Sättigung definiert verändern läßt, wie dies bei handelsüblichem BOPP-Polymerfilm mit Adhäsionsschichten dazwischen möglich ist, zum Beispiel bei Verwendung der Klebebandrolle "tesafilm kristallklar" ®.

Die Informationseinheiten sind bevorzugt derart ausgebildet sind, daß zumindest bei einigen Punkten keine Sättigung der Informationsträgerveränderung erfolgt ist und die Informationseinheiten mehr als zwei unterschiedliche Zustände einnehmen können.

Besonders vorteilhaft kann der Datenspeicher in einem Datenlaufwerk für einen Datenträger verwendet werden, in dem eine Relativbewegung zwischen Informationseinheiten und Lesekopf erfolgt, wobei der Datenträger sich allgemein in Ruhe befindet und/oder der Lesekopf sich insbesondere im Zentralbereich des Wickelkörpers dreht und axial hin- und herbewegt wird, um eine vorgegebene Spur zu finden.

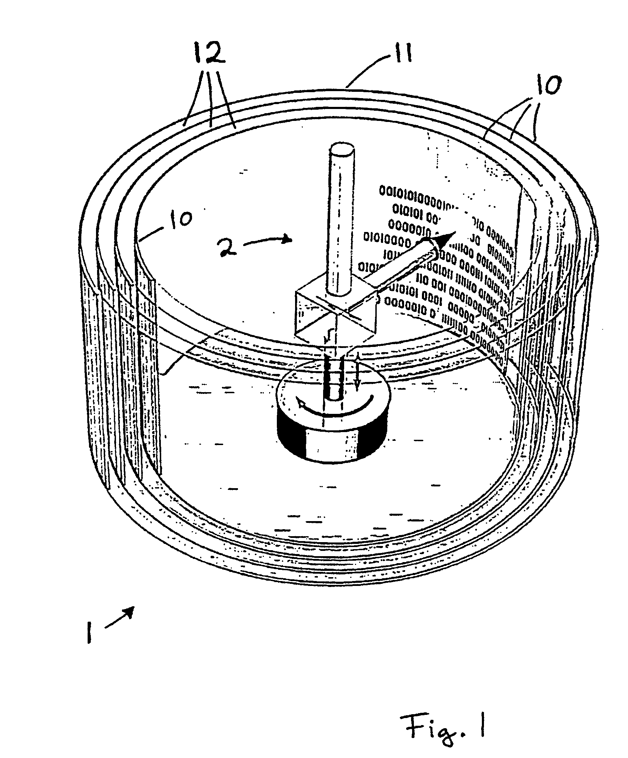

Die vorliegende Erfindung wird im folgenden mit Hilfe eines Beispiels anhand einer Zeichnung beschrieben, ohne damit die Erfindung unnötig einschränken zu wollen. In dieser zeigt die
- Figur 1: einen Datenspeicher der vorliegenden Erfindung in schematischer perspektivischer Darstellung.

Nach der Figur umfaßt der Datenspeicher 1 eine Anzahl von Wikkellagen 10 aus Polymerfilm 11, der vor dem Wickeln in beiden Flächenrichtungen vorgespannt wurde. Der Polymerfilm 11 besteht aus BOPP und weist eine Dicke von 35 µm auf. Zwischen den Lagen 10 ist ein luftblasenfreies Adhäsionsmittel 12 (Acrylat-Dispersionskleber) angeordnet mit einer Dicke von 23 µm. Der transparente Wickelkörper (Datenspeicher 1) umfaßt zwanzig Lagen 10 und hat einen Durchmesser von etwa 30 mm. Die Höhe des Wickelzylinders beträgt 19 mm. Der Wickelkörper ist kommerziell von der Firma Beiersdorf unter der Bezeichnung "tesafilm kristallklar" ® erhältlich.

Im Inneren des Wickelkernträgers ist eine Optik 2 angeordnet, mit welcher ein Lichtstrahl z.B. der Wellenlänge 630 nm oder 532 nm auf die einzelnen Wickellagen 10 fokussiert wird. Weiter kann die Optik 2 axial hin- und herbewegt werden. Die Optik 2 ist so ausgebildet, daß einerseits Energie deponiert und andererseits die an einer wählbaren Stelle einer gewünschten Wickellage 10 reflektierte Lichtintensität bestimmt werden kann. Um alle möglichen Punkte einer Wickellage 10 ansprechen zu können, rotiert die Optik 2 im Wickelkörperinneren, wobei eine nicht näher dargestellte Auswuchtung hohe Rotationsgeschwindigkeiten zuläßt. Eine Servosteuerung erlaubt die Fokussierung auf unterschiedliche Wickellagen 10.

Hiermit werden Daten gespeichert und gelesen wie folgt:

Es wird zunächst mit einer Leistung von 1 mW fokussiert auf einen Fleck von kleiner 1 µm (ein Mikrometer) eine bestimmte Energiemenge im Polymerfilm deponiert, wobei die Deposition der Energie direkt im Polymerfilm oder indirekt durch Erwärmung des Adhäsionsmittels erfolgen kann. Diese deponierte Energie verändert die optischen Eigenschaften des Polymerfilms, der sich aus dem vorgespannten Zustand rückverformt.

Nachfolgend kann die Änderung der optischen Eigenschaften durch Messung der Reflexionsintensität mit dem gleichen Laser und verringerter Einstrahlleistung ausgelesen werden.

Ein derart aufgebauter Datenspeicher ist kompakt, preiswert hinsichtlich der Datenträger und läßt eine Speicherdichte von wenigstens 10 Gigabyte pro Rolle zu. Höhere Speicherdichten ergeben sich bei verbesserten Filmdicken- und Materialwahlen.

Es ist möglich, die Datenspeicher vor dem Aufwickeln mit Information zur Formatierung und/oder mit gewünschter Information zu bespielen.

## Patentansprüche

1. Verwendung eines spiralartig aufgewickelten transparenten Polymerfilms (11) als Datenspeicher, wobei auf dem als Informationsträger dienenden transparenten Polymerfilm (11) optisch auslesbare Informationseinheiten vorgesehen sind, wobei der Informationsträger optisch transparent ist und die Informationseinheiten durch mehrere übereinanderliegende Informationsträgerlagen (10) hindurch auslesbar sind und wobei der Datenspeicher zum Auslesen im aufgewickelten Zustand eingerichtet ist.

2. Verwendung nach Anspruch 1, **dadurch gekennzeichnet, daß** als Polymerfilm (11) PMMA oder BOPP verwendet wird.

3. Verwendung nach Anspruch 1 oder 2, **dadurch gekennzeichnet, daß** zwischen den Polymerfilmlagen (10) ein transparentes Adhäsionsmittel (12) verwendet wird, insbesondere ein druckempfindlicher Kleber.

4. Verwendung nach Anspruch 3, **dadurch gekennzeichnet, daß** das Adhäsionsmittel (12) einen nur geringfügig vom Brechungsindex des Informationsträgers abweichenden Brechungsindex besitzt.

5. Verwendung nach Anspruch 4, **dadurch gekennzeichnet, daß** der Unterschied der Brechungsindices von Informationsträger und Adhäsionsmittel (12) so gering ist, daß die Reflexion an der Grenzschicht unter 4% beträgt, vorzugsweise unter 1%, ganz besonders, daß der Unterschied der Brechungsindices kleiner als 0,005 ist.

6. Verwendung nach einem der Ansprüche 1 bis 5, **dadurch gekennzeichnet, daß** der Polymerfilm (11) eine Dicke aufweist zwischen 10 und 100 µm, bevorzugt um oder unter 50 µm, insbesondere bevorzugt um 35 µm.

7. Verwendung nach einem der Ansprüche 3 bis 6, **dadurch gekennzeichnet, daß** das Adhäsionsmittel (12) eine Schichtdicke aufweist zwischen 1 und 40 µm, bevorzugt unter 25µm, insbesondere um 2µm.

8. Verwendung nach einem der Ansprüche 1 bis 7, **dadurch gekennzeichnet, daß** der Datenspeicher einen optisch transparenten Wickelkern aufweist, der insbesondere als transparenter Hohlzylinder gebildet ist.

9. Verwendung nach einem der Ansprüche 1 bis 8, **dadurch gekennzeichnet, daß** der Datenspeicher vorformatiert ist, wobei die Formatierung durch und/oder mittels der spiralartig aufgewickelten Informationsträgerlagen (10) gebildet ist.

10. Verwendung nach einem der Ansprüche 1 bis 9, **dadurch gekennzeichnet, daß** der optische Datenspeicher als Informationsträger einen transparenten Polymerfilm (11) umfaßt, der vorgespannt ist, insbesondere in zwei Ebenen.

11. Verwendung nach einem der Ansprüche 1 bis 10, **dadurch gekennzeichnet, daß** die oder einige der Informationseinheiten durch lokale thermische Erwärmung des Informationsträgers erzeugbar sind.

12. Verwendung nach Anspruch 11, **dadurch gekennzeichnet, daß** der vorgespannte Informationsträger am Ort der thermischen Erwärmung lokal eine geänderte optische Dichte aufweist, insbesondere mit einer Brechungsindexänderung von ca. 0,2.

13. Verwendung nach einem der Ansprüche 1 bis 12, **dadurch gekennzeichnet, daß** die Informationseinheiten durch Änderung der optischen Eigenschaften in einem Bereich von unter 1 µm Durchmesser gebildet sind.

14. Verwendung nach einem der Ansprüche 1 bis 13, **dadurch gekennzeichnet, daß** die Informationseinheiten für die Speicherung von einem von zwei Zuständen ausgebildet sind.

15. Verwendung nach einem der Ansprüche 1 bis 13, **dadurch gekennzeichnet, daß** die Informationseinheiten derart ausgebildet sind, daß zumindest bei einigen Punkten keine Sättigung der Informationsträgerveränderung erfolgt ist und die Informationseinheiten mehr als zwei unterschiedliche Zustände einnehmen können.

16. Verwendung nach einem der Ansprüche 1 bis 15, **dadurch gekennzeichnet, daß** der Datenspeicher in einem Datenlaufwerk verwendet wird, in dem eine Relativbewegung zwischen Informationseinheiten und Lesekopf (2) erfolgt, wobei der Datenträger sich allgemein in Ruhe befindet und der Lesekopf (2), insbesondere im Zentralbereich des Wickelkörpers, sich dreht.

## Claims

1. Use of a transparent polymer film (11) which is wound in a spiral fashion as a data storage medium, information units which can be read optically being provided on the transparent polymer film (11) which serves as data storage medium, the information carrier being optically transparent and it being possible for the information units to be read through a plurality of information carrier layers (10) arranged one on top of the other and the data storage medium being set up for reading in the wound state.

2. Use according to Claim 1, **characterized in that** PMMA or BOPP is used as polymer film (11).

3. Use according to Claim 1 or 2, **characterized in that** between the polymer film layers (10) a transparent adhesion agent (12) is used, in particular a pressure sensitive adhesive.

4. Use according to Claim 3, **characterized in that** the adhesion agent (12) possesses a refractive index which differs little from the refractive index of the information carrier.

5. Use according to Claim 4, **characterized in that** the difference in the refractive indices of information carrier and adhesion agent (12) is so little that the reflection at the boundary is less than 4%, preferably less than 1%, and, with very particular preference, such that the difference in the refractive indices is less than 0.005.

6. Use according to any of Claims 1 to 5, **characterized in that** the polymer film (11) has a thickness of between 10 and 100 µm, preferably around or below 50 µm, with particular preference around 35 µm.

7. Use according to any of Claims 3 to 6, **characterized in that** the adhesion agent (12) has a film thickness of between 1 and 40 µm, preferably below 25 µm, in particular around 2 µm.

8. Use according to any of Claims 1 to 7, **characterized in that** the data storage medium has an optically transparent winding core which is formed in particular as a transparent hollow cylinder.

9. Use according to any of Claims 1 to 8, **characterized in that** the data storage medium is preformatted, the formatting being formed by and/or by means of the information carrier layers (10) which are wound in a spiral fashion.

10. Use according to any of Claims 1 to 9, **characterized in that** the optical data storage medium comprises as information carrier a transparent polymer film (11) which is pretensioned, especially in two planes.

11. Use according to any of Claims 1 to 10, **characterized in that** the information units, or some of them, can be produced by local thermal heating of the information carrier.

12. Use according to Claim 11, **characterized in that**, at the location of the thermal heating, the pretensioned information carrier has a locally changed optical density, in particular with a change in refractive index of about 0.2.

13. Use according to any of Claims 1 to 12, **characterized in that** the information units are formed by changing the optical properties in a region of less than 1 µm in diameter.

14. Use according to any of Claims 1 to 13, **characterized in that** the information units are designed for the storage of one of two states.

15. Use according to any of Claims 1 to 13, **characterized in that** the information units are designed in such a way that, at least at some points, no saturation of the information carrier change has taken place, and the information units are able to adopt more than two different states.

16. Use according to any of Claims 1 to 15, **characterized in that** the data storage medium is used in a data drive, in which a relative movement takes place between information units and reading head (2), with data carrier generally being stationary and the reading head (2), especially in the central region of the wound body, rotating.

## Revendications

1. Utilisation d'un film polymère transparent enroulé en spirale (11) comme mémoire, dans laquelle il est prévu sur le film polymère transparent (11) servant de support d'informations des unités d'information optiquement lisibles, le support d'informations est optiquement transparent et les unités d'informations peuvent être lues à travers plusieurs couches superposées (10) de support d'informations, la mémoire étant aménagée pour la lecture à l'état enroulé.

2. Utilisation selon la revendication 1, **caractérisée en ce que** l'on utilise comme film polymère (11) du PMMA ou du BOPP.

3. Utilisation selon la revendication 1 ou 2, **caractérisée en ce que** l'on utilise entre les couches de film polymère (10) un agent adhésif transparent (12), en particulier une colle sensible à la pression.

4. Utilisation selon la revendication 3, **caractérisée en ce que** l'agent adhésif (12) possède un indice de réfraction ne s'écartant que légèrement de l'indice de réfraction du support d'informations.

5. Utilisation selon la revendication 4, **caractérisée en ce que** la différence d'indice de réfraction du support d'informations et de l'agent adhésif (12) est assez faible pour que la réflexion sur la couche limite se situe en dessous de 4%, de préférence en dessous de 1%, en particulier pour que la différence d'indice de réfraction soit plus petite que 0,005.

6. Utilisation selon l'une quelconque des revendications 1 à 5, **caractérisée en ce que** le film polymère (11) présente une épaisseur entre 10 et 100 µm, de préférence de 50 µm ou moins, en particulier de 35 µm.

7. Utilisation selon l'une quelconque des revendications 3 à 6, **caractérisée en ce que** l'agent adhésif (12) présente une épaisseur de couche entre 1 et 40 µm, de préférence en dessous de 25 µm, tout particulièrement de 2 µm.

8. Utilisation selon l'une quelconque des revendications 1 à 7, **caractérisée en ce que** la mémoire présente une âme d'enroulement optiquement transparent, qui est formée en particulier d'un cylindre creux transparent.

9. Utilisation selon l'une quelconque des revendications 1 à 8, **caractérisée en ce que** la mémoire est pré-formatée, le formatage étant réalisé par et/ou au moyen des couches de support d'informations enroulées en spirale (10).

10. Utilisation selon l'une quelconque des revendications 1 à 9, **caractérisée en ce que** la mémoire optique comprend comme support d'informations un film polymère transparent (11) qui est précontraint, en particulier dans deux plans.

11. Utilisation selon l'une quelconque des revendications 1 à 10, **caractérisée en ce que** les ou certaines des unités d'informations peuvent être produites par chauffage thermique local du support d'informations.

12. Utilisation selon la revendication 11, **caractérisée en ce que** le support d'informations polarisé présente à l'emplacement du chauffage thermique localement une densité optique modifiée, en particulier avec une modification de l'indice de réfraction d'environ 0,2.

13. Utilisation selon l'une quelconque des revendications 1 à 12, **caractérisée en ce que** les unités d'informations sont formées par modification des propriétés optiques dans une plage de diamètre en dessous de 1 µm.

14. Utilisation selon l'une quelconque des revendications 1 à 13, **caractérisée en ce que** les unités d'informations sont conformées pour la mémorisation d'un de deux états.

15. Utilisation selon l'une quelconque des revendications 1 à 13, **caractérisée en ce que** les unités d'information sont conformées de manière qu'au moins en certains points, il ne se produise pas de saturation de la modification du support d'informations et que les unités d'information puissent adopter plus de deux états différents.

16. Utilisation selon l'une quelconque des revendications 1 à 15, **caractérisée en ce que** la mémoire est utilisée dans un lecteur de données, dans lequel se produit un déplacement relatif entre les unités d'informations et la tête de lecture (2), le support de données se trouvant en général au repos et la tête de lecture (2) tournant en particulier dans la zone centrale de la bobine.
